(19) Europäisches Patentamt / European Patent Office / Office européen des brevets

(11) **EP 3 883 707 B1**

(12) **EUROPEAN PATENT SPECIFICATION**

(45) Date of publication and mention
of the grant of the patent:
**04.01.2023 Bulletin 2023/01**

(21) Application number: **19813136.9**

(22) Date of filing: **14.11.2019**

(51) International Patent Classification (IPC):
**B22D 41/12** (2006.01)    **B22D 47/00** (2006.01)
**B22D 46/00** (2006.01)    **C21C 5/28** (2006.01)
**C21C 5/52** (2006.01)    **F27D 19/00** (2006.01)

(52) Cooperative Patent Classification (CPC):
**B22D 47/00; B22D 46/00; C21C 5/285;
C21C 5/5294; F27B 14/00; F27D 19/00;**
F27B 2014/106; Y02P 10/20

(86) International application number:
**PCT/IB2019/059773**

(87) International publication number:
**WO 2020/104899 (28.05.2020 Gazette 2020/22)**

(54) **A METHOD AND SYSTEM FOR MONITORING AND TRANSPORTING LADLES IN A METALLURGICAL FACILITY**

VERFAHREN UND SYSTEM ZUR ÜBERWACHUNG UND ZUM TRANSPORTIEREN VON PFANNEN IN EINER METALLURGISCHEN ANLAGE

PROCÉDÉ ET SYSTÈME DE SURVEILLANCE ET DE TRANSPORT DE POCHES DANS UNE INSTALLATION MÉTALLURGIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2018 EP 18208106**

(43) Date of publication of application:
**29.09.2021 Bulletin 2021/39**

(73) Proprietor: **ABB Schweiz AG
5400 Baden (CH)**

(72) Inventors:
• **MATHUR, Tarun Prakash
Bangalore 560037 (IN)**

• **NANDWANA, Anurag
Bangalore 560067 (IN)**
• **KC, Praveen
Bangalore 560015 (IN)**
• **C, Vinod
Bangalore 560048 (IN)**

(74) Representative: **Zimmermann & Partner
Patentanwälte mbB
Postfach 330 920
80069 München (DE)**

(56) References cited:
**EP-A1- 3 000 901    EP-A1- 3 021 255
GB-A- 2 270 929**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

Integrated steel plants are large throughput industries producing liquid melt and solidified products using primary raw materials like iron ore. The integrated steel plant/ metallurgical facility (100) comprises various processing units/ processing plants. Each unit is configured for a specific type of processing. For example, a blast furnace converts iron oxides into liquid iron by heating and reducing the iron oxides. The Iron ore gets transformed into liquid iron and is tapped from a blast furnace. The liquid iron is passed through various processing units in a steel melt shop before it is converted into a liquid melt of steel. The liquid melt obtained from a converter in steel melt shop area after the various processing steps is at a very high temperature of around 1600 $^0$C. In a caster, the steel melt or molten metal is molded to specific shapes. For continuous casting, the liquid melt of steel has to be transported from the converters to the casters. Usually, transfer cars and cranes are used for transporting the molten metal from the converters to the casters. The molten metals are poured into ladles and the ladles are placed in the transfer cars to be taken to further processing units.

The ladles transportation and related thermal loss is of prime importance so that the melt reaches at the right temperature at the caster to ensure the desired metallurgical properties of the final product. The cranes carrying ladles are mostly manually synchronized for ladles movements and also the thermal aspects of the ladle and melt are decided in Ladle furnace area based on prior experience and standard operating procedures. Monitoring of ladles will positively impact crane movement to optimize the ladle movement within the steel melt shop as well as it will help in deciding the correct heating amount to be done in ladle furnaces, the preceding processing unit before the caster.

Conventionally, the ladles are monitored using Radio Frequency Identification (RFID) and sensors alike. However due to the high temperature even on the outside surface of the ladle and environmental conditions in the steel melt shop, the RFID tags often break down and require frequent replacement. The frequent replacement of the RFID tags leads to increased cost and affects the monitoring process. Moreover, RFID based trackers rely on receivers and are often restricted by range of the receivers. Therefore, the ladles are not always within the range of the receiver. EP 3 000 901 A1 describes metal industry system and method for tracking a container, in particular of a metallurgical container; EP 3 021 255 A1 describes an identification tag for attachment to a metallurgical vessel, reading station and method for determining a wear status for the identification tag; GB 2 270 929 A describes continuous automatic steel making method and facility.

Only tracking ladles is not sufficient but also to schedule the crane movements for pick up and drop of ladles as well as reducing the thermal energy spent on overheating the ladles in absence of non-visibility of ladles and their schedule. During transportation of the ladles, energy of the molten metal is reduced in the form of heat loss. The molten metal has to be maintained at particular temperature range before being casted. Often times, operators heat the melt little higher to compensate for the waiting times and related thermal loss of the ladles. Sometimes, the molten metal has to be reheated and then the molten metal is provided to the caster. All these cases result in higher energy consumption. Thus, there is a need to address the above problems.

**SUMMARY OF THE INVENTION**

The present invention discloses a method and a control system for monitoring location of a ladle in a metallurgical facility (100). The ladle carries molten metal from a first processing unit to a second processing unit via a transport means comprising one or more transfer cars and one or more cranes. The control system comprises of an imaging unit and a process control unit. The imaging unit captures one or more images of the ladle. It is positioned adjacent to a track provided for each transfer car and proximate to the first processing unit. The transfer car is configured to transport the ladle from a first end of the track proximate to the first processing unit, to a second end of the track. The process control unit configured to receive a one or more images of the ladle from the imaging unit and determine an identity of the ladle using the one or more images. It then associates the identity of the ladle with an identity of a transfer car. Further it is configured to receive sensor data related to position of the transfer car periodically from first set of sensors provided in the transfer car for monitoring the location of the ladle during transportation of the ladle from the first end of the track to the second end of the track. At the second end of the track a crane among the one or more cranes is operated to transport the ladle from the second end of the track to the second processing unit. The process control unit is configured to detect a transfer of the ladle from the transfer car to the crane based on sensor data related to a loading arm of the crane received from the second set of sensors provided in the crane. It also receives the position of the crane periodically from the second set of sensors in the cranes to monitor the location of the crane transporting the ladle to the second processing unit.

In another embodiment the method and system for estimation of heat loss in the ladle is disclosed. The process control unit estimates the amount of heat-loss in the ladle by using parameters of the molten metal, properties of the ladle, thermal history of the ladle from previous circulations and the time taken for the transfer car to transport the ladle from first one position to another.

In another embodiment the system and method for scheduling the crane is disclosed. The process control unit receives sensor data related to position and loading arm of each of the cranes from the second set of sensors provided in the cranes. It receives sensor data related to status of the second processing unit received from a third set of sensors associated with the second processing unit. In the final step the process control unit identifies a crane amongst the one or more cranes for transporting the ladle from the transfer car to one of the second processing unit and the third processing unit based on the estimated amount of heat-loss in the ladle and the sensor data related to status of the second processing unit.

## BRIEF DESCRIPTION OF THE DRAWINGS

Fig. 1 is a simplified diagram illustrating the metallurgical facility (100), in accordance with an embodiment of the present disclosure.

Fig. 2 is a simplified flow-chart illustrating the method of monitoring the ladle, in accordance with an embodiment of the present disclosure.

Fig. 3 is a simplified flow-chart illustrating the method for estimating the heat-loss in the ladle, in accordance with an embodiment of the present disclosure.

Fig. 4 is a simplified flow-chart illustrating the method to the schedule the crane, in accordance with an embodiment of the present disclosure.

Fig. 5 is a simplified mapping of the cranes and the ladles in the x-y co-ordinate system.

## DETAILED DESCRIPTION OF THE INVENTION

The Figures illustrate an embodiment of a metallurgical facility (100) wherein a method and a control system for monitoring location of a ladle are depicted. Based on the foregoing, it is to be generally understood that the nomenclature and terms used herein is convenient to describe the invention given the broadest meaning to one skilled in the art.

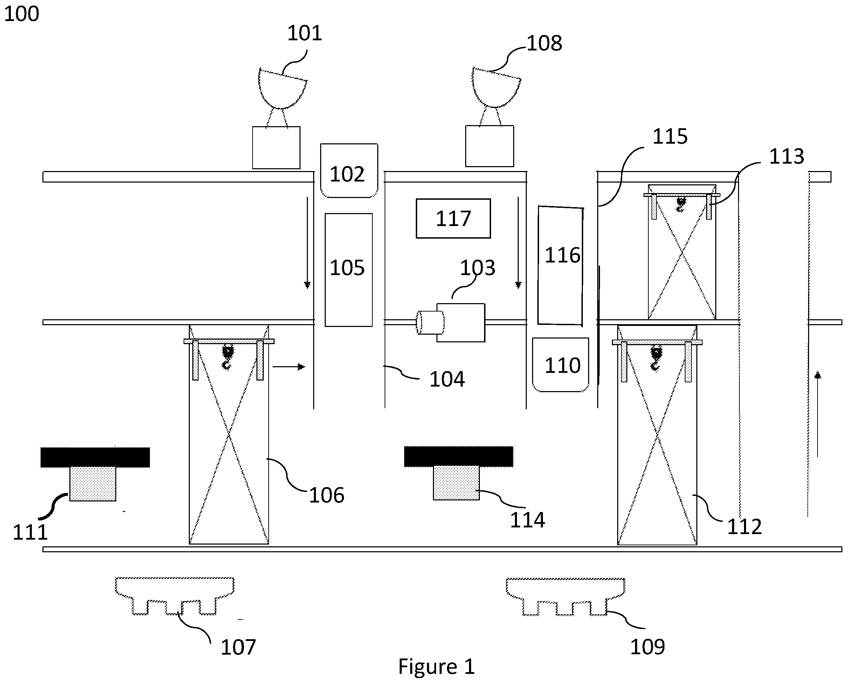

Referring to FIG. 1, shows a simplified diagram of a metallurgical facility (100) (100). The metallurgical facility (100) comprises of a control system, converters (101,108), casters (107,109), blast furnaces (111,114), ladles (102,110), one or more transfer cars (105,116) that move on a track (104,115) provided in the metallurgical facility (100), one or more cranes (106,112,113). The control system includes but is not limited to an imaging unit (103) and a process control unit (117).

A converter is referred as a first processing unit (101,108) in the present disclosure. A converter is a chemical reactor that converts liquid iron into Steel. The converter therefore contains the processed motel metal and pours the processed molten metal into the ladles, for example ladles (102,110). Each ladle is placed on their respective transfer cars. For example, the ladle 102 is placed on the transfer car 105 and the ladle 110 is placed on the transfer car (116). Each transfer car is configured to move over a track provided in the metallurgical facility (100). For example the transfer car (105) is configured to move on the track (104).

In an embodiment, the transfer cars can move in a first direction over the track and in a direction opposite to the first direction over the track. In an embodiment, each track (104,115) has two ends, a first end is proximate to a first processing unit and a second end is towards a second processing unit. Thus, each transfer car is configured to carry/ transfer a ladle from the first end to the second end of the track. The transfer cars are provided with a first set of sensors including, but are not limited to, an accelerometer, a temperature sensor, a position sensor for example a Global Positioning System (GPS) or a Radio Detection and Ranging (RADAR). The data provided by the sensors are referred as sensor data. For example, sensor data of the first set of sensors mean the data provided by the first set of sensors. The control system receives the sensor data related to rate of movement, temperature and position from these first set of sensors. An imaging unit (103) is placed adjacent to the track provided with each transfer car and proximate to the first processing unit for capturing the images of a ladle associated with a transfer car.

In an embodiment, the imaging unit (103) captures images of specific regions of the ladles indicative of an identity of the ladles. At the second end of the track a crane amongst the one or more cranes (106,112,113) is provided to lift the ladle from the transfer car and transport the ladle to the caster or the furnace. The crane is provided with a second set of sensors which includes, but are not limited to, the position sensor and the load sensor. The control system receives the sensor data related to position and status of a loading arm of the crane from these second set of sensors provided in the crane. The loading arm of the crane is configured to lift the ladle from the transfer cars and transport the ladle to one of the second and third processing unit.

The caster which molds the molten metal into a specific shape is referred as the second processing unit for example processing units (107,109). A type of reheating facility typically a blast furnace is referred as the third processing unit for example processing unit (108,111). In an embodiment, the crane is configured to transport the ladle to a blast furnace based on heat loss of the molten metal present in the ladle and a status of the caster. After reheating the molten metal, the crane transports the ladle from the blast furnace to the caster. A third set of sensors is associated with the caster to monitor a status of the caster. For example, the status of the caster is a "empty" or "not empty" and the like. Heat loss in the molten metal is estimated by the control unit.

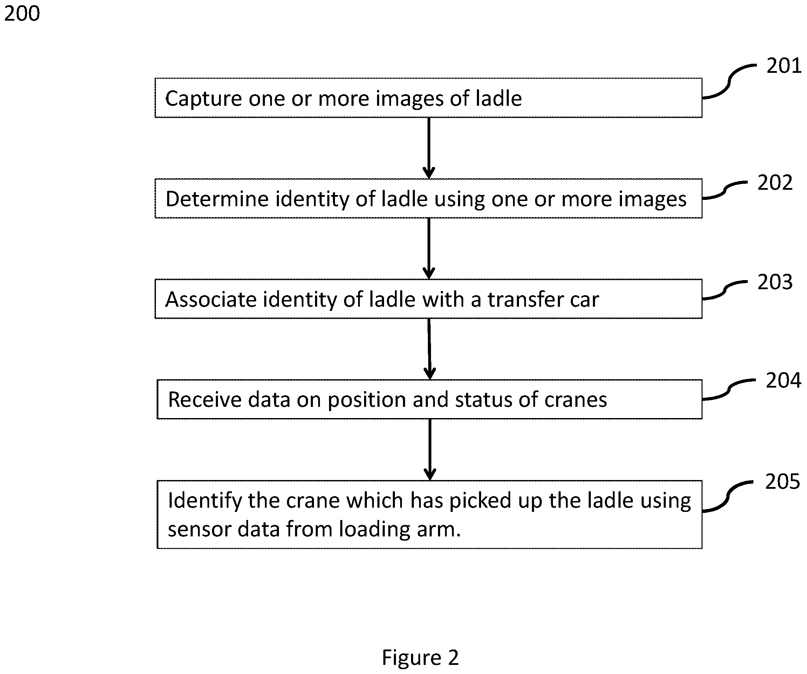

Referring to FIG. 2, a simplified method for monitoring of ladle (200) in the metallurgical facility (100) is illustrated. The ladle monitoring essentially comprises of the following steps. At step (201) the imaging unit (103) positioned adjacent to the first processing unit (101) captures one or more images of a ladle (102). At step (202) based on the images captured, an identity of the ladle is determined. At step (203) the identity of the ladle is associated with an identity of a transfer car (105). At step (204) sensor data related to position of each crane for examples cranes (106,112,113) is received. At step (205) a crane (106) is identified which has picked up the ladle based on sensor data relating to loading arm of the crane.

The method tracks the ladle movement on the basis of the movement of the transfer cars and the cranes. Since movement of the ladles in the melt shop is performed using the transfer car and cranes, the movement of ladles is estimated by tagging the transfer car and crane with ladle and tracking their movement in the metallurgical facility (100). This is further explained using figure 1. As shown in figure 1, the converters (101,108) contain the molten metal which is to be transported to the second processing unit for example casters (107,109) for casting. Further illustration is made with respect to the converter (101), ladle (102) and transfer car (105). A person skilled in the art will understand that the method steps can be applied for different elements of the metallurgical facility (100). The converter (101) pours the molten metal into ladle (102). The ladle (102) is placed in a transfer car (105) configured to move on track (104). The ladle placed in the transfer cars is has to be moved from the first processing unit to the second processing unit. At time instance $T_1$, the ladle (102) is brought to the converter (101). The converter (101) pours the molten metal into the ladle (102). In an embodiment, the control system determines that the molten metal is poured into the ladle (102) based on the sensor data (position data) received from the first set of sensors provided in the transfer cars.

An imaging unit (103) is placed adjacent to the track (104) associated with the transfer car (105). In an embodiment, the imaging unit (103) is configured to capture images of the ladles (104) placed in the transfer car (105). The control system receives the images of the ladle (102) from the imaging unit (103). An identity of the ladle (102) is determined from the images of the ladle. For example, the images of the ladle can indicate an identity number present on the ladle. In another example, a mark on the ladle can indicate the identity of the ladle. In an embodiment, the imaging unit can capture images of a particular region of the ladle to determine the identity of the ladle. The control system further determines that the identity of the ladle (102) is placed in the transfer car (105) using a mapping between an identity of the transfer car (105), an identity of the imaging unit (103) and the identity of the ladle (102). For example, the imaging unit (103) can be configured to capture images of any ladle present in the transfer car (105). When the control unit receives images of the ladle from the imaging unit (103), the control unit determines the identity of the ladle and recognizes that the ladle (102) is placed in the transfer car (105).

Subsequent to this, the ladle (102) is moved towards the second end of a track (104). The transfer car (105) includes a plurality of sensors which are associated with the control system. The control system receives the sensor data from the first set of sensors. The sensor data includes but is not limited to position of the transfer car (105). The sensor data is received at regular intervals. Thus, the control system tracks the position of the transfer car, thereby tracking position of the ladle. Further, the process control unit (117) uses the position of the transfer car (105) received at regular intervals to estimate the rate of movement of the transfer car. The rate of movement of the transfer car is used to estimate time taken ($T_n$) by the transfer car to reach the second end of the track. Thereafter, the control system schedules a crane among the one or more cranes at the second end of the track.

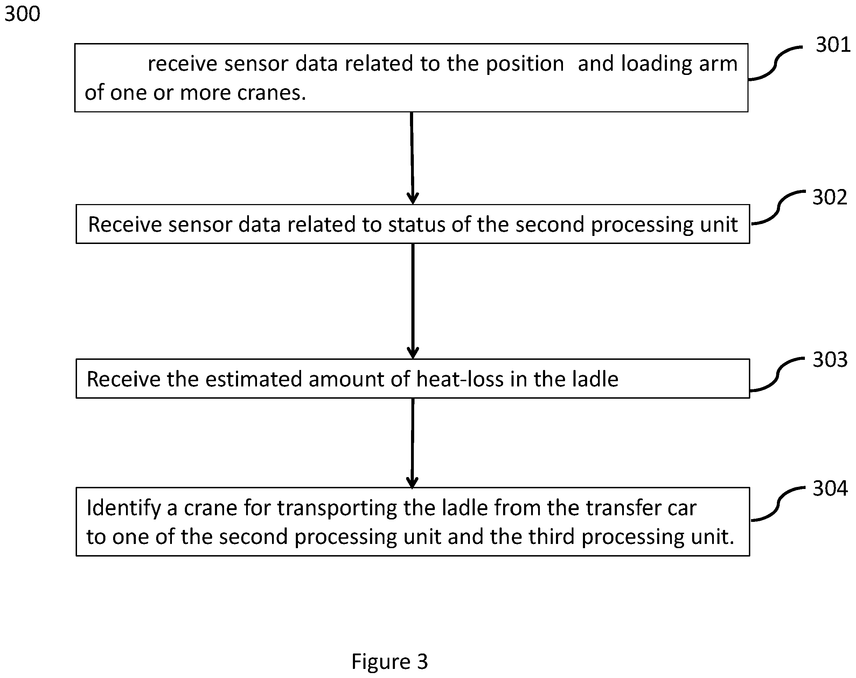

Referring to FIG. 3, a simplified method to the schedule a crane (300) is illustrated. At step (301) control system receives sensor data related to position and loading arm of each of the cranes from the second set of sensors provided in each of the cranes for example the cranes (106,112,113).

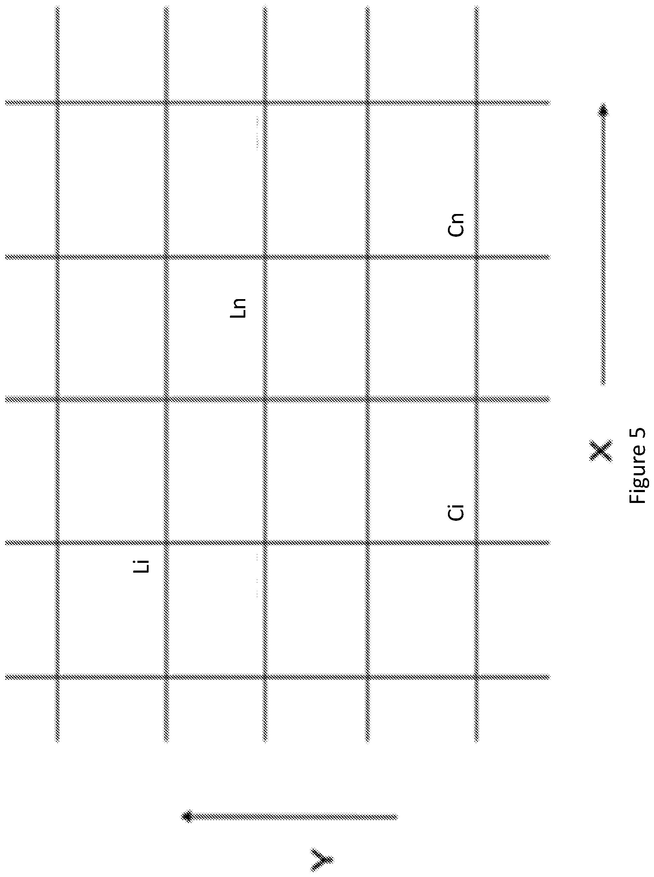

In the FIG. 5 an embodiment, the melt shop bay(s) is (are) mapped in x-y coordinate by using crane and the transfer car positions obtained from a position sensor like RADAR or GPS or any alike system provided in each of the transfer car and the cranes. The production schedule, position of the cranes, loading status of the loading arm of the cranes, and rate of movement of each of the cranes are continuously monitored by the control system. According to the aforementioned information the control system schedules a crane for transporting the ladle from the transfer car to one of the second and third processing unit. This consists of two levels of scheduling (a) long horizon scheduling (LHS) and (b) dynamic job allocation (DJA). The LHS is determined based on the planned production schedule for the entire batch of ladles. The DJA incorporates any unforeseen changes not accounted in the long horizon scheduling. For example, the DJA reschedules the next batch of ladles jobs based on any recent event like breakout, unplanned shutdown of the facility etc.

According to the mapped position of the cranes and the transfer car in the x-y coordinate the control system determines a crane nearest to the transfer car (105) at time instance $T_1$ (i.e. when the ladle (102) is brought proximate to the first processing unit (101) for receiving molten metal). The control system further checks the status of the loading arm of the nearest crane identified as nearest at T1. Based on above activities and the sensor data received related to position, rate of movement and status of loading arm of each of the cranes the control system identifies a crane for example crane (106) for lifting the ladle (102).

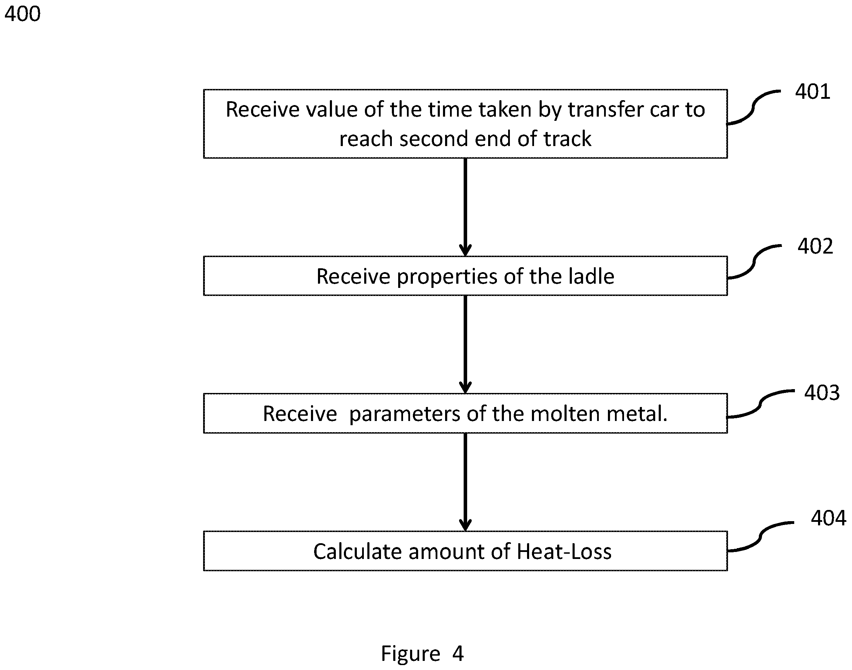

In an embodiment, the process control unit (117) also estimates amount of heat loss in the molten metal present in the ladle. Referring to FIG. 4, a simplified method for estimating heat-loss (400) in the ladle is depicted. The process control unit (117) estimates the heat loss in ladle (102) while its being transported from the first processing unit (101) to the second end of the track (104), based on 3 parameters. The first parameter is the time taken by the transfer car (105) to transport the ladle (102) from one end of the track to the second end of track referred as $T_n$. It is calculated by the process control unit (117) on the basis of rate of movement of the transfer car (105) carrying the ladle (102) and the location of the transfer car received periodically from the first set of sensors present in the transfer cars. At step (401) the process control unit (117) retrieves the value of time taken by the transfer car (105) to transport the ladle (102) from one end of the track to the second end of track referred as $T_n$. The second set of parameters are the properties of the ladle which include design of the ladle and properties of the substance used in construction of the ladle. At step (402) the process control unit (117) receives the properties of the ladle. The third set of parameters used is the properties of the molten metal present in the ladle. At step (403) the process control unit (117) receives the properties of the molten metal present in the ladle. The Control system utilizes the information about the molten metal which was previously in the converter 1 (101) and tags this information to the molten metal in Ladle 1 (102). The information includes the amount of molten metal, the composition of the molten metal and the temperature of the molten metal at which the molten metal was transferred into the ladle 1(102) at time instance T1. Following equations are used in determining the aforementioned parameters These equations or their modified forms are used in development of the thermal model.

$$q = \varepsilon\sigma A \left(T^4 - T_0^4\right)$$

for radiation

$$q = hA \left(T - T_0\right)$$

for convection

$$\frac{\partial T}{\partial t} = \frac{k}{\rho C_p}\frac{\partial^2 T}{\partial x^2}$$

for conduction

At step (404) the process control unit (117) using the value of parameters obtained from these equations and the Time ($T_n$) estimates the heat loss ($H_l$) in ladle while its being transported from one processing unit to the second processing unit. Subsequently, the ladle comes to the second end of the track at which the transfer car (105) stops. The control system then determines the Crane (106) has picked up the ladle based on sensor data received from loading arm of the crane (106). As shown in Figure 5 the Crane-ID (Ci) of the crane (106) which has picked ladle (102) is tagged with ladle-ID (Li) and used to indirectly track the ladle (Li) in this X-Y grid. Hence, the ladle (102) is now tagged along with crane (106) for monitoring its position.

Referring back to Figure 3 at step (302) the control system receives sensor data related to status of the second processing unit (111) from the third set of sensors associated with it. Further at step (303) the control system receives the amount of heat loss ($H_l$) as calculated previously. At step (304) the control system identifies a crane for transporting the ladle from the transfer car to one of the second processing unit and the third processing unit. If the heat-loss in the ladle is above a threshold level set in the control system, the control system schedules the crane (106) to transport the ladle (102) to the third processing unit (111) to re-heat the molten metal to the threshold level set and then transport it to the second processing unit (107). If the heat loss ($H_l$) is below the threshold level set in the control system, the control system then checks the status of the second processing unit (107). If the status of the second processing unit (107) is empty, the crane (106) transports the ladle (102) to the second processing unit (107). If the status of the second processing unit (107) is not empty the control system schedules the crane (106) to transport the ladle (102) to the third processing unit (111) to maintain the heat in the molten metal. When the status of the second processing unit (107) is indicated empty, the crane (106) is configured to transport the ladle (102) from the third processing unit (111) to the second processing unit (107). Based on the above information the crane identified for transporting the ladle transports the ladle from the transfer car to one of the second processing unit and the third processing unit.

The above disclosure has many advantages over the conventional methods of ladle monitoring in the metallurgical facility (100). Due to the use of imaging units instead of RFID tags for ladle tracking, the cost of the tracking mechanism is reduced. Since these imaging units don't require frequent replacement unlike the RFID tags the process of ladle tracking is smooth and continuous without any shut-downs. Additionally the better utilization of cranes & ladles leads to lower idle time of cranes thereby lowering the transfer time of ladles from the converter to the caster. This results in improved energy efficiency and energy conservation in the metallurgical facility (100).

REFERENCE NUMERALS

101- A Converter/First Processing unit

102- A ladle

103- Imaging unit

104- A Track

105- A transfer car

106- A crane

107- A Caster/second processing unit

108- A Converter/First Processing unit

109- A Caster/second processing unit

110- A ladle

111- A re-heating facility/third processing unit

112-A crane

113- A crane

114- A re-heating facility/third processing unit.

115- A track

116- A transfer car

117- a process control unit.

**Claims**

1. A control system for monitoring location of a ladle in a metallurgical facility (100), wherein the ladle carries molten metal from the first processing unit (108) to the second processing unit (107,1 109) via a transport means comprising one or more transfer cars (105, 116) and one or more cranes (112, 113) for transporting the ladle (102, 110) from a first processing unit (108) to a second processing unit (107, 109), the control system comprising:

an imaging unit (103) for capturing one or more images of the ladle (102, 110), wherein a track is provided for each transfer car (105, 116)and the imaging unit (103) is positioned adjacent to the track, proximate to the first processing unit (108), wherein the transfer car (105, 116) is configured to transport the ladle (102, 110) from a first end of the track proximate to the first processing unit (108), to a second end of the track;
a process control unit (117) configured to:

receive the one or more images of the ladle (102, 110) from the imaging unit (103);
determine an identity of the ladle (102, 110) using the one or more images captured;
associate the identity of the ladle (102, 110) with an identity of the transfer car, wherein the identity of the transfer car (105, 116) is determined based on the imaging unit (103);
receive sensor data related to position of the transfer car (105, 116) periodically from first set of sensors provided in the transfer car for monitoring the location of the ladle (102, 110) during transportation of the ladle (102, 110) from the first end of the track to the second end of the track, wherein a crane (112, 113) among the one or more cranes is operated to transport the ladle (102, 110) from the second end of the track to the second processing unit (107, 109);
detect a transfer of the ladle (102, 110) from the transfer car (105, 116) to the crane (112, 113) based on sensor data related to a loading arm of the crane (112, 113) received from the second set of sensors provided in the crane (112, 113); and
receive the position of the crane (112, 113) periodically from the second set of sensors in the cranes (112, 113) to monitor the location of the ladle (102, 110) in the metallurgical facility (100).

2. The control system as claimed in claim 1 wherein the process control unit (117) is configured to estimate the time taken for the transfer car (105, 116) to transport the ladle (102, 110) from first end of the track to the second end of the track using a value of a rate of movement of the transfer car (105,116) and the position of the transfer car (105, 116).

3. The control system as claimed in claim 2 wherein the process control unit (117) is configured to estimate the amount of heat-loss in the ladle (102,110) by using parameters of the molten metal, properties of the ladle and the time taken for the transfer car to transport the ladle.

4. The control system as claimed in claim 1 wherein the process control unit (117) is configured to schedule the crane (112, 113), the process control unit (117) is configured to:

receive sensor data related to position and loading arm of each of the cranes (112, 116) from the second set of sensors provided in the cranes (112, 116);
receive sensor data related to status of the second processing unit (107, 109) received from third set of sensors associated with the second processing unit (107, 109).

c. identify a crane amongst the one or more cranes for transporting the ladle (102, 110) from the transfer car (105, 116) to one of the second processing unit (107, 109) and the third processing unit (111) based on the estimated amount of heat-loss in the ladle (102, 110) and the sensor data related to status of the second processing unit (107, 109) received from third set of sensors associated with the second processing unit (107, 109).

5. A method for monitoring location of a ladle in a metallurgical facility (100), wherein the ladle (102, 110) carries molten metal from a first processing unit (108) to a second processing unit (107, 109) via a transport means comprising one or more transfer cars (105, 116) and one or more cranes (112, 113), the method comprising;

capturing, , one or more images of the ladle (102, 110) by an imaging unit (103), wherein a track is provided for each transfer car (105, 116) and the imaging unit (103) is positioned adjacent to the track ,proximate to the first processing unit (108) , wherein the transfer car (105, 116) is configured to transport the ladle (102, 110) from a first end of the track proximate to the first processing unit (108), to a second end of the track receiving the one or more images of the ladle (102, 110) from the imaging unit (103);

determining an identity of the ladle (102, 110) using the one or more images;

associating the identity of the ladle (102, 110) with an identity of the transfer car (105, 116), wherein the identity of the transfer car (105, 116) is determined based on the imaging unit (103);

receiving sensor data related to position of the transfer car (105, 116) periodically from the first set of sensors provided in the transfer car (105, 116) for monitoring the location of the ladle (102, 110) during transportation of the ladle from the first end of the track to the second end of the track, wherein a crane (112, 113) among the one or more cranes is operated to transport the ladle (102, 110) from the second end of the track to the second processing unit (107, 109);

detecting a transfer of the ladle (102, 110) from the transfer car (105, 116) to the crane (112,113) based on sensor data related to loading arm of the crane received from the second set of sensors provided in the crane (112, 113), and

receiving the position of the crane (112, 113) periodically from the second set of sensors in the cranes (!12, 113) to monitor the location of the ladle (102, 110) in a metallurgical facility (100).

6. The method as claimed in claim 5, wherein the value of the rate of movement of the transfer car (105, 116) and the position of the transfer car (105, 116) are used for estimating the time taken by the transfer car (105, 116) to transport the ladle (102, 110) from first end of the track to the second end of the track.

7. The method as claimed in claim 6, wherein parameters of the molten metal present in the ladle (102,110), properties of the ladle and the time taken for the transfer car to transport the ladle from first end of the track to the second end of the track along are used for estimating the amount of heat-loss in the ladle.

8. The method as claimed in claim 5 to schedule a crane (112, 113) ,the method comprising;

receiving sensor data related to position and loading arm of each of the cranes (112, 113) from the second set of sensors provided in the cranes (112, 113);

receiving sensor data related to status of the second processing unit (107, 109) received from third set of sensors associated with the second processing unit (107, 109).

identifying a crane amongst the one or more cranes (112, 113) for transporting the ladle (102, 110) from the transfer car (105, 116) to one of the second processing unit (107, 109) and the third processing unit (111) based on the estimated amount of heat-loss in the ladle (102, 110) and the sensor data related to status of the second processing unit (107, 109) received from third set of sensors associated with the second processing unit (107, 110).

**Patentansprüche**

1. Steuersystem zum Überwachen eines Standortes einer Pfanne in einer metallurgischen Anlage (100), wobei die Pfanne über ein Transportmittel, das einen oder mehrere Transferwagen (105, 116) und einen oder mehrere Krane (112, 113) zum Transportieren der Pfanne (102, 110) von einer ersten Bearbeitungseinheit (108) zu einer zweiten Bearbeitungseinheit (107,1 109) umfasst, geschmolzenes Metall von der ersten Bearbeitungseinheit (108) zu der zweiten Bearbeitungseinheit (107, 109) führt, wobei das Steuersystem umfasst:

eine Bildgebungseinheit (103) zum Aufnehmen eines oder mehrerer Bilder der Pfanne (102, 110), wobei für jeden Transferwagen (105, 116) eine Fahrbahn bereitgestellt ist und die Bildgebungseinheit (103) angrenzend an die Fahrbahn, nahe der ersten Bearbeitungseinheit (108), positioniert ist, wobei der Transferwagen (105, 116) dafür gestaltet ist, die Pfanne (102, 110) von einem ersten Ende der Fahrbahn nahe der ersten Bearbeitungseinheit (108) zu einem zweiten Ende der Fahrbahn zu transportieren, eine Prozesssteuereinheit (117), die gestaltet ist zum:

Empfangen des einen oder der mehreren Bilder der Pfanne (102, 110) von der Bildgebungseinheit (103),
Bestimmen einer Identität der Pfanne (102, 110) mit Hilfe des einen oder der mehreren aufgenommenen Bilder,
Zuordnen der Identität der Pfanne (102, 110) zu einer Identität des Transferwagens, wobei die Identität des Transferwagens (105, 116) basierend auf der Bildgebungseinheit (103) bestimmt wird,
periodisches Empfangen von Sensordaten bezüglich der Position des Transferwagens (105, 116) von einem ersten Satz von Sensoren, die in dem Transferwagen zur Überwachung des Standortes der Pfanne (102, 110) während des Transports der Pfanne (102, 110) von dem ersten Ende der Fahrbahn zu dem zweiten Ende der Fahrbahn bereitgestellt sind, wobei ein Kran (112, 113) von dem einen oder den mehreren Kranen betrieben wird, um die Pfanne (102, 110) von dem zweiten Ende der Fahrbahn zu der zweiten Bearbeitungseinheit (107, 109) zu transportieren,
Erkennen eines Transfers der Pfanne (102, 110) von dem Transferwagen (105, 116) zu dem Kran (112, 113) basierend auf Sensordaten bezüglich eines Ladearms des Krans (112, 113), die von dem zweiten Satz von Sensoren empfangen werden, welche in dem Kran (112, 113) bereitgestellt sind, und
periodisches Empfangen der Position des Krans (112, 113) von dem zweiten Satz von Sensoren in den Kranen (112, 113), um den Standort der Pfanne (102, 110) in der metallurgischen Anlage (100) zu überwachen.

2. Steuersystem nach Anspruch 1, wobei die Prozesssteuereinheit (117) dafür gestaltet ist, unter Verwendung eines Wertes einer Bewegungsgeschwindigkeit des Transferwagens (105, 116) und der Position des Transferwagens (105, 116) die Zeit zu schätzen, die der Transferwagen (105, 116) benötigt, um die Pfanne (102, 110) von dem ersten Ende der Fahrbahn zu dem zweiten Ende der Fahrbahn zu transportieren.

3. Steuersystem nach Anspruch 2, wobei die Prozesssteuereinheit (117) dafür gestaltet ist, unter Verwendung von Parametern des geschmolzenen Metalls, Eigenschaften der Pfanne und der Zeit, die der Transferwagen benötigt, um die Pfanne zu transportieren, den Umfang des Wärmeverlustes in der Pfanne (102, 110) zu schätzen.

4. Steuersystem nach Anspruch 1, wobei die Prozesssteuereinheit (117) dafür gestaltet ist, den Kran (112, 113) zeitlich zu planen, wobei die Prozesssteuereinheit (117) gestaltet ist zum:

Empfangen von Sensordaten bezüglich der Position und des Ladearms jedes der Krane (112, 116) von dem zweiten Satz von Sensoren, die in den Kranen (112, 116) bereitgestellt sind,
Empfangen von Sensordaten bezüglich des Status der zweiten Bearbeitungseinheit (107, 109), die von einem dritten Satz von Sensoren empfangen werden, die der zweiten Bearbeitungseinheit (107, 109) zugeordnet sind c. Identifizieren eines Kranes von dem einen oder den mehreren Kranen zum Transportieren der Pfanne (102, 110) von dem Transferwagen (105, 116) zu einer von der zweiten Bearbeitungseinheit (107, 109) und der dritten Bearbeitungseinheit (111), basierend auf dem geschätzten Umfang des Wärmeverlustes in der Pfanne (102, 110) und den Sensordaten bezüglich des Status der zweiten Bearbeitungseinheit (107, 109), die von dem dritten Satz von Sensoren empfangen werden, die der zweiten Bearbeitungseinheit (107, 109) zugeordnet sind.

5. Verfahren zum Überwachen eines Standortes einer Pfanne in einer metallurgischen Anlage (100), wobei die Pfanne (102, 110) über ein Transportmittel, das einen oder mehrere Transferwagen (105, 116) und einen oder mehrere Krane (112, 113) umfasst, geschmolzenes Metall von einer ersten Bearbeitungseinheit (108) zu einer zweiten Bearbeitungseinheit (107, 109) führt, wobei das Verfahren umfasst:

Aufnehmen eines oder mehrerer Bilder der Pfanne (102, 110) durch eine Bildgebungseinheit (103), wobei für jeden Transferwagen (105, 116) eine Fahrbahn bereitgestellt ist und die Bildgebungseinheit (103) angrenzend an die Fahrbahn, nahe der ersten Bearbeitungseinheit (108), positioniert ist, wobei der Transferwagen (105, 116) dafür gestaltet ist, die Pfanne (102, 110) von einem ersten Ende der Fahrbahn nahe der ersten Bearbeitungseinheit (108) zu einem zweiten Ende der Fahrbahn zu transportieren,
Empfangen des einen oder der mehreren Bilder der Pfanne (102, 110) von der Bildgebungseinheit (103),
Bestimmen einer Identität der Pfanne (102, 110) unter Verwendung des einen oder der mehreren Bilder,

Zuordnen der Identität der Pfanne (102, 110) zu einer Identität des Transferwagens (105, 116), wobei die Identität des Transferwagens (105, 116) basierend auf der Bildgebungseinheit (103) bestimmt wird,

periodisches Empfangen von Sensordaten bezüglich der Position des Transferwagens (105, 116) von dem ersten Satz von Sensoren, die in dem Transferwagen (105, 116) zur Überwachung des Standortes der Pfanne (102, 110) während des Transports der Pfanne von dem ersten Ende der Fahrbahn zu dem zweiten Ende der Fahrbahn bereitgestellt sind, wobei ein Kran (112, 113) von dem einen oder den mehreren Kranen betrieben wird, um die Pfanne (102, 110) von dem zweiten Ende der Fahrbahn zu der zweiten Bearbeitungseinheit (107, 109) zu transportieren,

Erkennen eines Transfers der Pfanne (102, 110) von dem Transferwagen (105, 116) zu dem Kran (112, 113) basierend auf Sensordaten bezüglich eines Ladearms des Krans, die von dem zweiten Satz von Sensoren empfangen werden, welche in dem Kran (112, 113) bereitgestellt sind, und periodisches Empfangen der Position des Krans (112, 113) von dem zweiten Satz von Sensoren in den Kranen (112, 113), um den Standort der Pfanne (102, 110) in einer metallurgischen Anlage (100) zu überwachen.

**6.** Verfahren nach Anspruch 5, wobei der Wert der Bewegungsgeschwindigkeit des Transferwagens (105, 116) und die Position des Transferwagens (105, 116) verwendet werden, um die Zeit zu schätzen, die der Transferwagen (105, 116) benötigt, um die Pfanne (102, 110) von dem ersten Ende der Fahrbahn zu dem zweiten Ende der Fahrbahn zu transportieren.

**7.** Verfahren nach Anspruch 6, wobei Parameter des geschmolzenen Metalls, das in der Pfanne (102, 110) vorhanden ist, Eigenschaften der Pfanne und die Zeit, die der Transferwagen benötigt, um die Pfanne von dem ersten Ende der Fahrbahn zu dem zweiten Ende der Fahrbahn zu transportieren, verwendet werden, um den Umfang des Wärmeverlustes in der Pfanne zu schätzen.

**8.** Verfahren nach Anspruch 5, zum zeitlichen Planen eines Krans (112, 113), wobei das Verfahren umfasst:

Empfangen von Sensordaten bezüglich der Position und des Ladearms jedes der Krane (112, 113) von dem zweiten Satz von Sensoren, die in den Kranen (112, 113) bereitgestellt sind,

Empfangen von Sensordaten bezüglich des Status der zweiten Bearbeitungseinheit (107, 109), die von einem dritten Satz von Sensoren empfangen werden, die der zweiten Bearbeitungseinheit (107, 109) zugeordnet sind,

Identifizieren eines Kranes von dem einen oder den mehreren Kranen (112, 113) zum Transportieren der Pfanne (102, 110) von dem Transferwagen (105, 116) zu einer von der zweiten Bearbeitungseinheit (107, 109) und der dritten Bearbeitungseinheit (111), basierend auf dem geschätzten Umfang des Wärmeverlustes in der Pfanne (102, 110) und den Sensordaten bezüglich des Status der zweiten Bearbeitungseinheit (107, 109), die von dem dritten Satz von Sensoren empfangen werden, die der zweiten Bearbeitungseinheit (107, 110) zugeordnet sind.

**Revendications**

**1.** Système de commande pour surveiller un emplacement d'une poche de coulée dans une installation métallurgique (100), dans lequel la poche de coulée emporte un métal en fusion depuis la première unité de traitement (108) jusqu'à la deuxième unité de traitement (107,1 109) par l'intermédiaire d'un moyen de transport comprenant un ou plusieurs chariots de transfert (105, 116) et un ou plusieurs ponts roulants (112, 113) pour transporter la poche de coulée (102, 110) depuis une première unité de traitement (108) jusqu'à une deuxième unité de traitement (107, 109), le système de commande comprenant :

une unité d'imagerie (103) pour capturer une ou plusieurs images de la poche de coulée (102, 110), dans lequel un rail est prévu pour chaque chariot de transfert (105, 116) et l'unité d'imagerie (103) est positionnée de façon adjacente au rail, à proximité de la première unité de traitement (108), dans lequel le chariot de transfert (105, 116) est configuré pour transporter la poche de coulée (102, 110) depuis une première extrémité du rail à proximité de la première unité de traitement (108) jusqu'à une seconde extrémité du rail ;

une unité de commande de processus (117) configurée pour :

recevoir l'une ou les plusieurs images de la poche de coulée (102, 110) à partir de l'unité d'imagerie (103) ;

déterminer une identité de la poche de coulée (102, 110) en utilisant l'une ou les plusieurs images capturées ;

associer l'identité de la poche de coulée (102, 110) à une identité du chariot de transfert, dans lequel l'identité du chariot de transfert (105, 116) est déterminée sur la base de l'unité d'imagerie (103) ;

recevoir des données de capteur connexes à une position du chariot de transfert (105, 116) périodiquement à partir d'un premier ensemble de capteurs prévus dans le chariot de transfert pour surveiller l'emplacement de la poche de coulée (102, 110) durant le transport de la poche de coulée (102, 110) depuis la première extrémité du rail jusqu'à la seconde extrémité du rail, dans lequel un pont roulant (112, 113) parmi l'un ou les plusieurs ponts roulants est mis en fonctionnement pour transporter la poche de coulée (102, 110) depuis la seconde extrémité du rail jusqu'à la deuxième unité de traitement (107, 109) ;

détecter un transfert de la poche de coulée (102, 110) depuis le chariot de transfert (105, 116) jusqu'au pont roulant (112, 113) sur la base de données de capteur connexes à un bras de chargement du pont roulant (112, 113), reçues à partir du deuxième ensemble de capteurs prévus dans le pont roulant (112, 113) ; et

recevoir la position du pont roulant (112, 113) périodiquement à partir du deuxième ensemble de capteurs dans les ponts roulants (112, 113) pour surveiller l'emplacement de la poche de coulée (102, 110) dans l'installation métallurgique (100).

**2.** Système de commande selon la revendication 1, dans lequel l'unité de commande de processus (117) est configurée pour estimer le temps pris pour que le chariot de transfert (105, 116) transporte la poche de coulée (102, 110) depuis la première extrémité du rail jusqu'à la seconde extrémité du rail, en utilisant une valeur d'une vitesse de mouvement du chariot de transfert (105, 116) et la position du chariot de transfert (105, 116).

**3.** Système de commande selon la revendication 2, dans lequel l'unité de commande de processus (117) est configurée pour estimer la quantité de perte de chaleur dans la poche de coulée (102, 110) en utilisant des paramètres du métal en fusion, des propriétés de la poche de coulée et le temps pris pour que le chariot de transfert transporte la poche de coulée.

**4.** Système de commande selon la revendication 1, dans lequel l'unité de commande de processus (117) est configurée pour programmer le pont roulant (112, 113), l'unité de commande de processus (117) est configurée pour :

recevoir des données de capteur connexes à une position et un arbre de chargement de chacun des ponts roulants (112, 116) à partir du deuxième ensemble de capteurs prévus dans les ponts roulants (112, 116) ;

recevoir des données de capteur connexes à un état de la deuxième unité de traitement (107, 109), reçues à partir de troisième ensemble de capteurs associée à la deuxième unité de traitement (107, 109) ;

c. identifier un pont roulant parmi l'un ou les plusieurs ponts roulants pour transporter la poche de coulée (102, 110) depuis le chariot de transfert (105, 116) jusqu'à une de la deuxième unité de traitement (107, 109) et de la troisième unité de traitement (111) sur la base de la quantité estimée de perte de chaleur dans la poche de coulée (102, 110) et des données de capteur connexes à l'état de la deuxième unité de traitement (107, 109), reçues à partir du troisième ensemble de capteurs associés à la deuxième unité de traitement (107, 109).

**5.** Procédé pour surveiller un emplacement d'une poche de coulée dans une installation métallurgique (100), dans lequel la poche de coulée (102, 110) emporte un métal en fusion depuis une première unité de traitement (108) jusqu'à une deuxième unité de traitement (107, 109) par l'intermédiaire d'un moyen de transport comprenant un ou plusieurs chariots de transfert (105, 116) et un ou plusieurs ponts roulants (112, 113), le procédé comprenant :

la capture d'une ou de plusieurs images de la poche de coulée (102, 110) par une unité d'imagerie (103), dans lequel un rail est prévu pour chaque chariot de transfert (105, 116) et l'unité d'imagerie (103) est positionnée de façon adjacente au rail, à proximité de la première unité de traitement (108), dans lequel le chariot de transfert (105, 116) est configuré pour transporter la poche de coulée (102, 110) depuis une première extrémité du rail à proximité de la première unité de traitement (108) jusqu'à une seconde extrémité du rail ;

la réception de l'une ou des plusieurs images de la poche de coulée (102, 110) à partir de l'unité d'imagerie (103) ;

la détermination d'une identité de la poche de coulée (102, 110) en utilisant l'une ou les plusieurs images ;

l'association de l'identité de la poche de coulée (102, 110) à une identité du chariot de transfert (105, 116), dans lequel l'identité du chariot de transfert (105, 116) est déterminée sur la base de l'unité d'imagerie (103) ;

la réception de données de capteur connexes à une position du chariot de transfert (105, 116) périodiquement à partir du premier ensemble de capteurs prévus dans le chariot de transfert (105, 116) pour surveiller l'emplacement de la poche de coulée (102, 110) durant le transport de la poche de coulée depuis la première extrémité du rail jusqu'à la seconde extrémité du rail, dans lequel un pont roulant (112, 113) parmi l'un ou les plusieurs ponts roulants est mis en fonctionnement pour transporter la poche de coulée (102, 110) depuis la seconde extrémité du rail jusqu'à la deuxième unité de traitement (107, 109) ;

la détection d'un transfert de la poche de coulée (102, 110) depuis le chariot de transfert (105, 116) jusqu'au pont roulant (112, 113) sur la base de données de capteur connexes à un arbre de chargement du pont roulant, reçues à partir du deuxième ensemble de capteurs prévus dans le pont roulant (112, 113), et

la réception de la position du pont roulant (112, 113) périodiquement à partir du deuxième ensemble de capteurs dans les ponts roulants (112, 113) pour surveiller l'emplacement de la poche de coulée (102, 110) dans une installation métallurgique (100).

**6.** Procédé selon la revendication 5, dans lequel la valeur de la vitesse de mouvement du chariot de transfert (105, 116) et la position du chariot de transfert (105, 116) sont utilisées pour estimer le temps pris par le chariot de transfert (105, 116) pour transporter la poche de coulée (102, 110) depuis la première extrémité du rail jusqu'à la seconde extrémité du rail.

**7.** Procédé selon la revendication 6, dans lequel des paramètres du métal en fusion présent dans la poche de coulée (102, 110), des propriétés de la poche de coulée et le temps pris pour que le chariot de transfert transporte la poche de coulée depuis la première extrémité du rail jusqu'à la seconde extrémité du rail sont utilisés pour estimer la quantité de perte de chaleur dans la poche de coulée.

**8.** Procédé selon la revendication 5 pour programmer un pont roulant (112, 113), le procédé comprenant :

la réception de données de capteur connexes à une position et un arbre de chargement de chacun des ponts roulants (112, 113) à partir du deuxième ensemble de capteurs prévus dans les ponts roulants (112, 113) ;

la réception de données de capteur connexes à un état de la deuxième unité de traitement (107, 109), reçues à partir d'un troisième ensemble de capteurs associés à la deuxième unité de traitement (107, 109) ;

l'identification d'un pont roulant parmi l'un ou les plusieurs ponts roulants (112, 113) pour transporter la poche de coulée (102, 110) depuis le chariot de transfert (105, 116) jusqu'à une de la deuxième unité de traitement (107, 109) et de la troisième unité de traitement (111) sur la base de la quantité estimée de perte de chaleur dans la poche de coulée (102, 110) et des données de capteur connexes à l'état de la deuxième unité de traitement (107, 109), reçues à partir du troisième ensemble de capteurs associés à la deuxième unité de traitement (107, 110).

Figure 1

200

EP 3 883 707 B1

```
Capture one or more images of ladle                                    201

Determine identity of ladle using one or more images                   202

Associate identity of ladle with a transfer car                        203

Receive data on position and status of cranes                          204

Identify the crane which has picked up the ladle using
sensor data from loading arm.                                          205
```

Figure 2

300

| receive sensor data related to the position and loading arm of one or more cranes. | 301 |

| Receive sensor data related to status of the second processing unit | 302 |

| Receive the estimated amount of heat-loss in the ladle | 303 |

| Identify a crane for transporting the ladle from the transfer car to one of the second processing unit and the third processing unit. | 304 |

Figure 3

400

| Receive value of the time taken by transfer car to reach second end of track | — 401 |

$\downarrow$

| Receive properties of the ladle | — 402 |

$\downarrow$

| Receive parameters of the molten metal. | — 403 |

$\downarrow$

| Calculate amount of Heat-Loss | — 404 |

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3000901 A1
- EP 3021255 A1
- GB 2270929 A